# EUROPÄISCHE PATENTSCHRIFT

(11) **EP 2 688 777 B1**
(45) Veröffentlichungstag und Bekanntmachung des Hinweises auf die Patenterteilung: **10.08.2016**
(21) Anmeldenummer: 12703089.8
(22) Anmeldetag: 06.02.2012
(51) Int. Cl.: B60S 1/40, B60S 1/38

(54) **WISCHBLATT MIT EINER ADAPTEREINHEIT ZUR ANLENKUNG AN EINEM WISCHERARM**
WIPER BLADE WITH AN ADAPTER UNIT FOR COUPLING TO A WIPER ARM
RACLETTE D'ESSUIE-GLACE POURVUE D'UNE UNITÉ D'ADAPTATION POUR L'ARTICULATION SUR UN BRAS D'ESSUIE-GLACE

(30) Priorität: 24.03.2011 DE 102011006006
(43) Veröffentlichungstag der Anmeldung: 29.01.2014
(73) Patentinhaber: Robert Bosch GmbH, 70442 Stuttgart (DE)
(72) Erfinder: HELLER, Joachim, 77815 Buehl (DE)
(86) Internationale Anmeldenummer: PCT/EP2012/051924
(87) Internationale Veröffentlichungsnummer: WO 2012/126667

(56) Entgegenhaltungen:
- DE-A1- 10 340 139
- DE-A1-102008 001 426
- FR-A1- 2 842 485
- FR-A1- 2 868 378
- JP-A- 2007 331 493

## Beschreibung

### Stand der Technik

Die vorliegende Erfindung betrifft ein Wischblatt für einen Scheibenwischer, mit einer Wischleiste und einer Adaptereinheit zur Anlenkung der Wischleiste an einem Wischerarm.

Die WO 2008/145481 A1 beschreibt ein derartiges Wischblatt mit einer Wischleiste, die über eine zugeordnete Adaptereinheit an einem Wischerarm angelenkt wird. Hierzu wird die Adaptereinheit an einer Basisanschlussvorrichtung befestigt, die an der Wischleiste befestigt wird.

Nachteilig an diesem Stand der Technik ist, dass die Verbindung zwischen Wischerarm und Wischblatt über eine durch Kombination der Basisanschlussvorrichtung mit der Adaptereinheit ausgebildete Anlenkvorrichtung erfolgt, die eine konstruktiv bedingte, vergleichsweise große Bauhöhe aufweist und somit eine entsprechend große Angriffsfläche bietet. Diese kann z. B. bei Verwendung des Wischblatts für einen Fahrzeugscheibenwischer aufgrund eines entsprechenden Fahrtwinds zu unerwünschten Windgeräuschen führen.

Weiterer gattungsgemäßer Stand der Technik ist aus der DE 10 2008 001426 A1, aus der DE 103 40 139 A1 und der FR 2 842 485 A1 bekannt

### Offenbarung der Erfindung

Eine Aufgabe der Erfindung ist es daher, ein neues Wischblatt für einen Scheibenwischer bereit zu stellen, mit einer Anlenkvorrichtung zur Anlenkung an einem Wischerarm, die eine reduzierte Bauhöhe aufweist.

Dieses Problem wird gelöst durch ein Wischblatt für einen Scheibenwischer, mit einer Wischleiste und einer Adaptereinheit zur Anlenkung der Wischleiste an einem Wischerarm. Die Adaptereinheit ist dauerhaft an der Wischleiste befestigt und weist ein der Wischleiste zugewandtes Wandelement auf, an dem mindestens ein bolzenartiges Fixierelement vorgesehen ist. Dieses ist dazu ausgebildet, zur Fixierung des Wischerarms an der Adaptereinheit in mindestens eine am Wischerarm vorgesehene Aussparung einzugreifen.

Die Erfindung ermöglicht somit die Bereitstellung eines Wischblatts mit einer lediglich von einer Adaptereinheit ausgebildeten Anlenkvorrichtung zur Anlenkung an einem Wischerarm, wobei auf die Verwendung einer Basisanschlussvorrichtung verzichtet wird, sodass die Anzahl der zur Realisierung der Anlenkvorrichtung erforderlichen Bauteile sowie die Bauhöhe der Anlenkvorrichtung reduziert werden können.

Die am Wischerarm vorgesehene Aussparung ist bevorzugt eine Öffnung, wobei das bolzenartige Fixierelement zum Durchgreifen durch die Öffnung ausgebildet ist.

Somit kann eine unkomplizierte und schnelle Befestigung des Wischerarms an der an der Wischleiste befestigten Adaptereinheit ermöglicht werden.

An dem der Wschleiste zugewandten Wandelement ist bevorzugt mindestens eine abgerundete Auflagefläche für den Wischerarm vorgesehen, auf der der Wischerarm zumindest bereichsweise schwenkbar um eine der Auflagefläche zugeordnete Drehachse lagerbar ist.

Somit kann eine vergleichsweise niedrige Bauhöhe der Adaptereinheit ermöglicht werden.

Die Adaptereinheit weist parallel zur axialen Richtung der Wischleiste ausgerichtete und einander zugewandte, laterale Anlaufflächen auf. Diese sind senkrecht zur axialen Richtung der Wischleiste bevorzugt derart voneinander beabstandet, dass ein Seitenspiel des in der Adaptereinheit angeordneten Wischerarms im Bereich vorgegebener Toleranzen liegt.

Somit kann die Bereitstellung einer Adaptereinheit mit einem auf ein gewünschtes Maß reduzierten Seitenspiel ermöglicht werden.

Zumindest zwei in axialer Richtung der Wischleiste einander gegenüberliegende Anlaufflächen weisen eine geringere Beabstandung voneinander auf, als zumindest zwei weitere, in axialer Richtung der Wischleiste einander gegenüberliegende Anlaufflächen.

Somit kann auf einfache Art und Weise die Bereitstellung einer größeren Führungslänge zur Führung des Wischerarms in der Adaptereinheit ermöglicht werden.

Gemäß einer Ausführungsform ist ein Fixierglied zur Fixierung des Wischerarms an der Adaptereinheit vorgesehen.

Die Erfindung ermöglicht somit eine sichere und zuverlässige Fixierung des Wischerarms an der Adaptereinheit.

Das Fixierglied weist bevorzugt mindestens eine abgerundete Anlagefläche für den Wischerarm auf, an der der Wischerarm zumindest bereichsweise schwenkbar um eine der Anlagefläche zugeordnete Drehachse anlenkbar ist.

Somit kann auf einfache Art und Weise eine Verschwenkung des Wischerarms relativ zum Fixierglied bei einer mit einer vergleichsweise niedrigen Bauhöhe ausgebildeten Adaptereinheit ermöglicht werden.

Die Adaptereinheit ist bevorzugt an die Wischleiste angeschweißt und/oder angeklebt.

Somit kann eine unkomplizierte und sichere Befestigung der Adaptereinheit an der Wischleiste ermöglicht werden.

Die Adaptereinheit ist bevorzugt durch Kunststoffspritzen an die Wischleiste angeformt.

Somit kann eine stabile und kostengünstige Adaptereinheit bereitgestellt werden.

Gemäß einer Ausführungsform ist die Adaptereinheit Drehgelenkfrei ausgebildet.

Die Erfindung ermöglicht somit die Bereitstellung einer kostengünstigen Adaptereinheit mit einer vergleichsweise niedrigen Bauhöhe.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 eine Seitenansicht eines Wischblatts mit einer Wischleiste, an der eine Adaptereinheit zur Anlenkung an einem Wischerarm gemäß einer ersten Ausführungsform vorgesehen ist,
Fig. 2 eine perspektivische Ansicht eines Ausschnitts II des Wischblatts von Fig. 1 im montierten Zustand,
Fig. 3 eine perspektivische Ansicht des Ausschnitts II des Wischblatts von Fig. 1 bei der Fixierung des Wischerarms an der Adaptereinheit,
Fig. 4 die perspektivische Ansicht von Fig. 3 vor der Fixierung des Wischerarms an der Adaptereinheit, und
Fig. 5 eine Schnittansicht des Ausschnitts II des Wischblatts von Fig. 1 ohne das bolzenartige Fixierelement von Fig. 3 und 4.

### Beschreibung der Ausführungsbeispiele

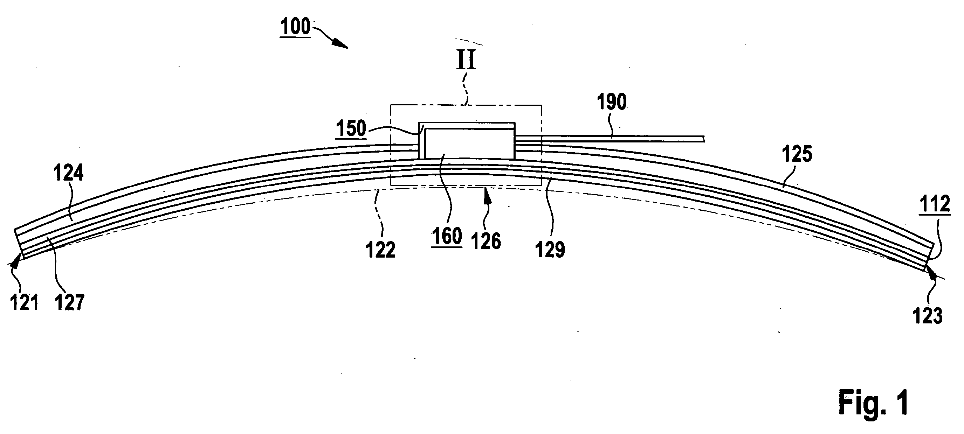

Fig. 1 zeigt ein illustrativ für einen Scheibenwischer eines Kraftfahrzeugs ausgebildetes Wischblatt 100 mit einer Wischleiste 112, die eine über einen Kippsteg 127 mit einer Rückenleiste 124 verbundene Wischlippe 129 aufweist. An der Rückenleiste 124 ist ein optionaler Spoiler 125 vorgesehen.

Gemäß einer Ausführungsform ist das Wischblatt 100 in Flachbalkenbauweise ausgebildet, d. h. die Wischleiste 112 weist seitliche Längsnuten auf, die beispielsweise an der Rückenleiste 124 ausgebildet sind und in denen zwei Tragschienen, vorzugsweise Federschienen, angeordnet sind. Alternativ hierzu kann die Wischleiste 112 als Hohlprofil mit einem beispielsweise in der Rückenleiste 124 vorgesehenen, etwa zentralen Längskanal ausgebildet sein, in dem eine einzelne Tragschiene angeordnet ist.

An der Wischleiste 112 ist eine von einem optionalen, deckelartigen Fixierglied 150 abgedeckte Adaptereinheit 160 zur Anlenkung der Wischleiste 112 an einem Wischerarm 190 befestigt, mit dessen Hilfe das Wischblatt 100 zum Wischen über eine strichpunktiert dargestellte Scheibe 122, z. B. eine Kraftfahrzeugscheibe, geführt werden kann. Die Adaptereinheit 160 ist bevorzugt dauerhaft an der Wischleiste 112 befestigt, z. B. zumindest abschnittsweise in einer hierzu vorgesehenen Unterbrechung bzw. Aussparung des Spoilers 125. Unter "dauerhaft" ist im Kontext der vorliegenden Erfindung zu verstehen, dass keine Mittel zum Loslösen der Adaptereinheit 160 von der Wischleiste 112 vorgesehen sind, sodass ein gewaltfreies bzw. zerstörungsfreies Lösen bevorzugt nicht möglich ist. Die Wischleiste 112 mit der daran vorgesehenen Adaptereinheit 160 ist bevorzugt Drehgelenkfrei ausgebildet.

In Fig. 1 ist das Wischblatt 100 noch nicht vollständig auf die Scheibe 122 aufgesetzt, es liegen nur dessen axiale Wischblattenden 121, 123 an der Scheibe 122 an, während die Wischleiste 112 in Wischblattmitte 126, d. h. etwa im Bereich der Adaptereinheit 160, noch von der Scheibe 122 beabstandet ist. Wird über den Wischerarm 190 eine vorgesehene Anpresskraft auf die Adaptereinheit 160 ausgeübt, legt sich die Wischleiste 112 an der Scheibe 122 an. Hierbei wird ein gleichmäßiger Anpressdruck über die gesamte Wischblattlänge erreicht, auch wenn sich die Scheibenkrümmung im Verlauf der Wischbewegung ändert.

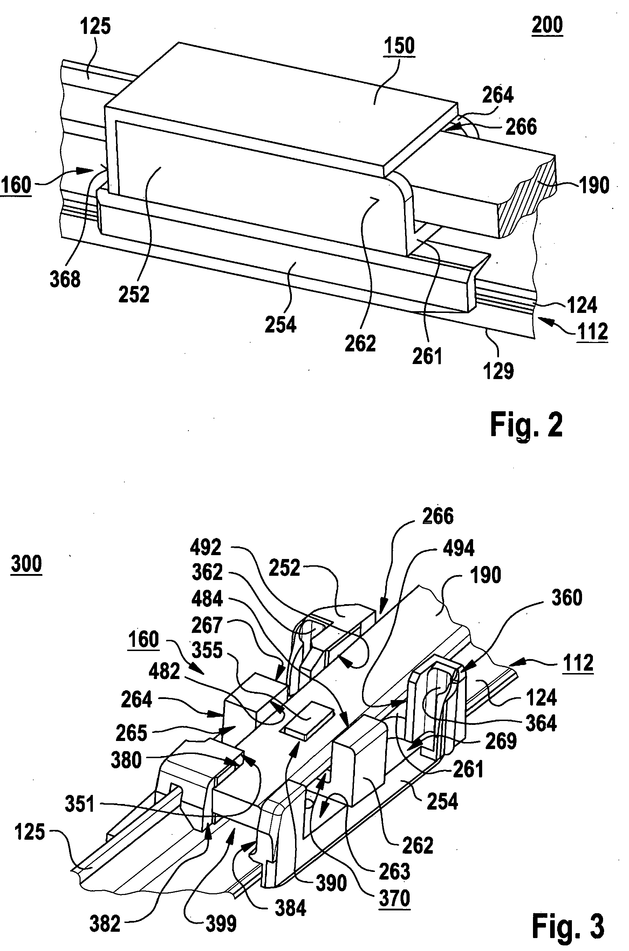

Fig. 2 zeigt eine Anordnung 200, die einen in Fig. 1 mit II gekennzeichneten Ausschnitt des Wischblatts 100 von Fig. 1 mit der Wischleiste 112 und der Adaptereinheit 160 gemäß einer Ausführungsform im montierten Zustand illustriert. Die Adaptereinheit 160 weist beispielhaft einen Anlenkabschnitt 252 zur Anlenkung der Wischleiste 112 am Wischerarm 190 von Fig. 1 und einen Befestigungsabschnitt 254 zur Befestigung der Adaptereinheit 160 an der Wischleiste 112 auf.

Gemäß einer Ausführungsform ist der Befestigungsabschnitt 254 an der Rückenleiste 124 der Wischleiste 112 bzw. an daran angeordneten Trag- bzw. Federschienen verschweißt, z. B. mittels Ultraschallschweißen. Es wird jedoch darauf hingewiesen, dass ein Verschweißen des Befestigungsabschnitts 254 an der Wischleiste 112 lediglich beispielhaft beschrieben ist und nicht als Einschränkung der vorliegenden Erfindung zu verstehen ist. Vielmehr können auch alternative Verbindungs- bzw. Befestigungsverfahren Anwendung finden, z. B. kann der Befestigungsabschnitt 254 an die Wischleiste 112 angeklebt werden.

Des Weiteren wird darauf hingewiesen, dass die zweiteilige Ausgestaltung der Adaptereinheit 160 mit dem Anlenkabschnitt 252 und dem Befestigungsabschnitt 254 ebenfalls nur beispielhaften Charakter hat und nicht als Einschränkung der Erfindung dient. Vielmehr kann die Adaptereinheit 160 auch als einstückiges Bauteil ausgeführt sein, das z. B. durch Kunststoffspritzen an die Wischleiste 112 angeformt ist. Deshalb beziehen sind die Begriffe "Befestigungsabschnitt" und "Anlenkabschnitt" lediglich auf unterschiedliche funktionale Bereiche der Adaptereinheit 160, aber nicht zwangsweise auf separate Bauteile.

Gemäß einer Ausführungsform weist der Anlenkabschnitt 252 eine etwa U-förmige Struktur auf, mit einem der Wischleiste 112 zugewandten Wandelement 261, das nachfolgend zur Vereinfachung der Beschreibung auch als "Bodenwand" bezeichnet wird, und daran angeformten, parallel zur axialen Erstreckung der Wischleiste 112 ausgerichteten, lateralen Seitenwänden 262, 264. Die Seitenwände 262, 264 sind bevorzugt derart voneinander beabstandet, dass ein Seitenspiel des in der Adaptereinheit 160 angeordneten Wischerarms 190 im Bereich vorgegebener Toleranzen liegt, um z. B. eine Verkantung des Wischerarms 190 in der Adaptereinheit 160 zu verhindern und somit eine gewünschte Funktionalität des Wischblatts 100 von Fig. 1 zu gewährleisten.

Die Bodenwand 261 und die Seitenwände 262, 264 bilden illustrativ einen Aufnahmeraum 266, in dem der Wischerarm 190 zumindest abschnittsweise aufgenommen ist. Der Raum 266 ist von dem optionalen, deckelartigen Fixierglied 150 abgedeckt, das zur Fixierung des Wischerarms 190 an der Adaptereinheit 160 vorgesehen ist. Der optionale Fixierdeckel 150 ist illustrativ L-förmig ausgebildet und weist eine Abschlusswand 368 auf, mit der der Aufnahmeraum 266 in axialer Richtung begrenzt ist. Gemäß einer Ausführungsform ist der optionale Fixierdeckel 150 an der Adaptereinheit 160 befestigt bzw. befestigbar, wie unten stehend bei Fig. 3 beschrieben.

Fig. 3 zeigt eine Anordnung 300, die den in Fig. 1 mit II gekennzeichneten Ausschnitt des Wischblatts 100 von Fig. 1 mit der Wischleiste 112 und der Adaptereinheit 160 nach einer beispielhaften Anlenkung bzw. Montage der Wischleiste 112 an dem Wischerarm 190 von Fig. 1 illustriert. Fig. 3 verdeutlicht den von der Bodenwand 261 und den Seitenwänden 262, 264 ausgebildeten Aufnahmeraum 266.

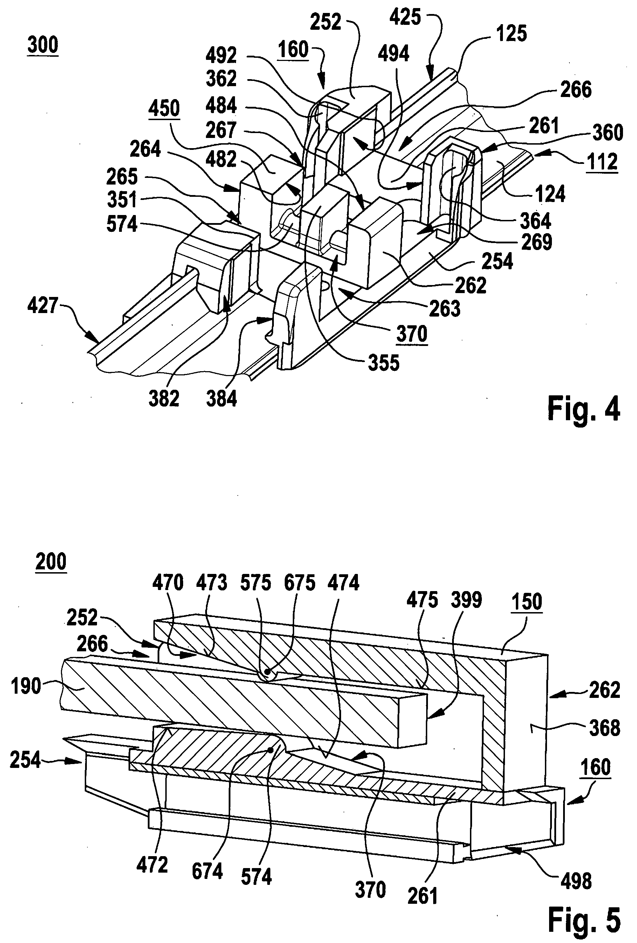

Gemäß einer Ausführungsform ist an der Bodenwand 261 zur Fixierung des Wischerarms 190 an der Adaptereinheit 160 mindestens ein bolzenartiges Fixierelement 355 vorgesehen, das nachfolgend auch als Fixierbolzen bezeichnet wird. Darüber hinaus ist an der Bodenwand 261 illustrativ eine Schwenkeinrichtung 370 ausgebildet, die unten bei Fig. 4 und 5 im Detail beschrieben ist.

An den Seitenwänden 262, 264 ist illustrativ eine Rastvorrichtung 360 ausgebildet, die beispielhaft an der Seitenwand 262 eine Halterung 364 und an der Seitenwand 264 eine Halterung 362 aufweist. In die Halterungen 362, 364 sind z. B. an dem Fixierdeckel 150 von Fig. 1 und 2 vorgesehene Pressstifte einpressbar, um somit eine Fixierung des Fixierdeckels 150 an der Adaptereinheit 160 zu ermöglichen.

Es wird jedoch darauf hingewiesen, dass der Fixierdeckel 150 wie bei Fig. 1 und 2 beschrieben optional ist, da bei einer entsprechenden Auslegung der Adaptereinheit 160 und einer von dem Wischerarm 190 auf die Adaptereinheit 160 ausübbaren Anpresskraft auf eine Verwendung des Fixierdeckels 150 verzichtet werden kann. Deshalb wird in Fig. 2 zur Vereinfachung der Zeichnung auf eine Darstellung des optionalen Fixierdeckels 150 verzichtet. Darüber hinaus wird darauf hingewiesen, dass die Verwendung der Halterungen 362, 364 und zugeordneter, am optionalen Fixierdeckel 150 vorgesehener Pressstifte lediglich beispielhaften Charakter hat und nicht als Einschränkung der Erfindung dient. Vielmehr kann der optionale Fixierdeckel 150 auf beliebige Art und Weise an der Adaptereinheit 160 befestigt werden.

Gemäß einer Ausführungsform sind die Seitenwände 262, 264 unterbrochen, d. h. mit Aussparungen 263, 269 bzw. 265, 267 versehen. Diese ermöglichen bei der Herstellung der Adaptereinheit 160 eine Material- bzw. Werkstoffeinsparung, die insbesondere bei hohen Stückzahlen in der Herstellung der Adaptereinheit 160 vorteilhaft ist, jedoch keine Auswirkungen auf die Funktionsweise der Adaptereinheit 160 haben. Deshalb ist die vorliegende Erfindung weder auf durchgehende Seitenwände 262, 264 beschränkt, wie in Fig. 1, 2 und 5 gezeigt, noch auf unterbrochene Seitenwände 262, 264, wie in Fig. 3 und 4 gezeigt.

Illustrativ bilden die Seitenwände 262, 264 parallel zur axialen Richtung der Wischleiste 112 ausgerichtete und einander zugewandte, laterale Anlaufflächen 382, 482, 492, 384, 484, 494 aus. Diese sind senkrecht zur axialen Richtung der Wischleiste 112 derart voneinander beabstandet, dass ein Seitenspiel des in der Adaptereinheit 160 angeordneten Wischerarms 190 im Bereich vorgegebener Toleranzen liegt. Zumindest zwei in axialer Richtung der Wischleiste 112 einander gegenüberliegende Anlaufflächen 382, 384 weisen hierbei beispielhaft eine geringere Beabstandung voneinander auf, als zumindest zwei weitere, in axialer Richtung der Wischleiste 112 einander gegenüberliegende Anlaufflächen 482, 484 bzw. 492, 494. Diese geringere Beabstandung entsteht beispielhaft durch einen an der Seitenwand 264 vorgesehenen Vorsprung 351, an dem die laterale Anlauffläche 382 ausgebildet ist.

Illustrativ sind in einem der Adaptereinheit 160 zugewandten, axialen Endbereich 399 des Wischerarms 190 eine erste Aussparung 390 und eine zweite Aussparung 380 vorgesehen. Die erste Aussparung 390 ist beispielhaft nach Art einer Öffnung ausgebildet, durch die der Fixierbolzen 355 zur Fixierung des Wischerarms 190 an der Adaptereinheit 160 durchgreifen kann. Alternativ hierzu kann die Aussparung 390 z. B. in der Form von einer oder mehreren Nuten ausgebildet sein, die beispielsweise senkrecht zur axialen Erstreckung des Wischerarms 190 an dessen Schmalseiten ausgebildet sein können und in die der bzw. die Fixierbolzen 355 zur Fixierung des Wischerarms 190 an der Adaptereinheit 160 eingreifen kann bzw. können. Die zweite Aussparung 380 bildet beispielhaft eine stufenförmige Verjüngung des Wischerarms 190 aus, bei der eine dem Wischerarm 190 zugeordnete Breite von einem ersten Wert in einen kleineren, zweiten Wert übergeht.

Bei der Fixierung der Adaptereinheit 160 an dem Wischerarm 190 wird dessen axialer Endbereich 399 in dem Aufnahmeraum 266 der Adaptereinheit 160 auf der Schwenkeinrichtung 370 angeordnet. Hierbei kann eine präzise Positionierung des Wischerarms 190 durch den an der Adaptereinheit 160 vorgesehenen Vorsprung 351 und die an dem Wischerarm 190 vorgesehene Aussparung 380 ermöglicht werden. Dann wird der Fixierbolzen 355 der Adaptereinheit 160 durch die Öffnung 390 im Wischerarm 190 durchgeführt und die Wischleiste 112 mit dem Wischerarm 190 z. B. auf die Kraftfahrzeugscheibe 122 von Fig. 1 aufgedrückt. Hierbei kann die Wischleiste 112 durch eine vom Wischerarm 190 auf diese ausgeübte Anpresskraft gegen eine Auf- und Abbewegung - in Fig. 3 hoch und runter- gesichert werden, wobei seitliche und axiale Bewegungen des Wischerarms 190 relativ zur Adaptereinheit 160 durch deren laterale Seitenwände 262, 264, den Vorsprung 351 und den Fixierbolzen 355 zumindest beschränkt werden. Darüber hinaus kann bei Bedarf der optionale Fixierdeckel 150 wie oben beschrieben an der Adaptereinheit 160 befestigt werden.

Fig. 4 zeigt die Anordnung 300 von Fig. 3 mit der Wischleiste 112 und der daran befestigten Adaptereinheit 160. Zur Verdeutlichung einer beispielhaften Ausführungsform der Adaptereinheit 160 wurde hierbei auf eine Darstellung des Wischerarms 190 von Fig. 3 verzichtet.

Gemäß einer Ausführungsform ist die Adaptereinheit 160 wie bei Fig. 1 beschrieben zumindest abschnittsweise in einer Unterbrechung des Spoilers 125 angeordnet, d. h. illustrativ zwischen einem vorderen - in Fig. 4 linken unteren - Abschnitt 427 und einem hinteren - in Fig. 4 rechten oberen - Abschnitt 425 des Spoilers 125. Die Seitenwände 262, 264 der Adaptereinheit 160 sind, wie bei Fig. 3 beschrieben, mit den Aussparungen 263, 269 bzw. 265, 267 versehen und bilden die lateralen Anlaufflächen 384, 484, 494 bzw. 382, 482, 492 aus. Darüber hinaus bildet die Seitenwand 264 den Vorsprung 351 aus. Dieser ist illustrativ derart bemessen, dass er zumindest bereichsweise auf dem vorderen Abschnitt 427 des Spoilers 125 angeordnet ist. Somit kann die Adaptereinheit 160 eine axiale Erstreckung aufweisen, die größer ist als die Beabstandung zwischen vorderem und hinterem Abschnitt 427 bzw. 425 des Spoilers 125, sodass die Adaptereinheit 160 im Vergleich zu gebräuchlichen Adaptereinheiten eine vergrößerte Längserstreckung aufweist und somit die Bereitstellung einer für den Wischerarm 190 von Fig. 3 vergrößerten Führungslänge ermöglicht werden kann.

Illustrativ ist die Adaptereinheit 160 in Fig. 4 zweiteilig ausgebildet und weist ein etwa U-förmiges Mittelteil 450 auf, das z. B. auf die Bodenwand 261 aufgeklebt ist oder an diese angeschweißt, an dieser verrastet oder auf eine beliebige andere Art und Weise an dieser befestigt ist. Es wird jedoch darauf hingewiesen, dass diese Darstellung lediglich beispielhaften Charakter hat und nicht als Einschränkung der Erfindung zu verstehen ist, bei der das Mittelteil 450 und die Adaptereinheit 160 bevorzugt einstückig ausgebildet sind.

An dem Mittelteil 450 sind illustrativ der Fixierbolzen 355 sowie die Schwenkeinrichtung 370 vorgesehen. Diese weist zumindest eine abgerundete Auflagefläche 574 auf. Die Funktions- bzw. Arbeitsweise der Schwenkeinrichtung 370 wird unten bei Fig. 5 beschrieben.

Fig. 5 zeigt eine Schnittansicht der Anordnung 200 von Fig. 2 zur Verdeutlichung der Fixierung der mit dem optionalen Fixierdeckel 150 abgedeckten Adaptereinheit 160 von Fig. 3 und 4 an dem Wischerarm 190, sowie zur Verdeutlichung der Funktionsweise der Schwenkeinrichtung 370 von Fig. 3 und 4. Hierbei wurde zur Vereinfachung der Zeichnung auf eine Darstellung der Wischleiste 112 von Fig. 1 und 2 sowie des Fixierbolzens 355 von Fig. 3 und 4 verzichtet.

Gemäß einer Ausführungsform weist der Befestigungsabschnitt 254 der Adaptereinheit 160 krallenartige Befestigungsglieder auf, die die Wischleiste 112 von Fig. 1 und 2 bzw. deren Rückenleiste 124 zumindest abschnittsweise umgreifen, wie in Fig. 1 und 2 gezeigt. Die Befestigungskrallen sind illustrativ über die mit der ersten Schwenkeinrichtung 370 versehene Bodenwand 261 miteinander verbunden. In Fig. 5 ist nur eine Befestigungskralle 498 sichtbar.

Die Schwenkeinrichtung 370 weist wie bei Fig. 4 beschrieben die abgerundete Auflagefläche 574 auf, die gemäß einer Ausführungsform eine zur Bodenwand 261 im Wesentlichen parallel ausgerichtete Längsfläche 472 und eine abgewinkelte Schrägfläche 474 miteinander verbindet. Alternativ hierzu kann auch die Längsfläche 472 um einen vorgegebenen Winkel abgeschrägt sein.

An dem optionalen Fixierdeckel 150 ist illustrativ an einer der Adaptereinheit 160 zugewandten Unterseite eine zweite Schwenkeinrichtung 470 ausgebildet. Diese weist illustrativ eine zum Fixierdeckel 150 im Wesentlichen parallel ausgerichtete Längsfläche 475 und eine abgewinkelte Schrägfläche 473 auf, die über eine abgerundete Anlagefläche 575 miteinander verbunden sind. Alternativ hierzu kann auch die Längsfläche 475 um einen vorgegebenen Winkel abgeschrägt sein.

Gemäß einer Ausführungsform liegt der Wischerarm 190 auf der abgerundeten Auflagefläche 574 auf und an der abgerundeten Anlagefläche 575 an. Hierbei ist der Wischerarm 190 bevorzugt derart zwischen der Auflagefläche 574 und der Anlagefläche 575 gelagert, dass ein vertikales Spiel innerhalb vorgegebener Toleranzen realisierbar ist. Die abgerundete Auflagefläche 574 und die abgerundete Anlagefläche 575 liegen beispielhaft derart einander gegenüber, dass sich die Längsfläche 475 von der Anlagefläche 575 in Richtung des Wischerarms 190 von dessen axialem Endbereich 399 weg erstreckt und die Längsfläche 472 sich von der Auflagefläche 574 ausgehend in die entgegengesetzte Richtung erstreckt. Die Schrägfläche 474 erstreckt sich von der Auflagefläche 574 in Richtung des Wischerarms 190 von dessen axialem Endbereich 399 weg, während sich die Schrägfläche 473 von der Anlagefläche 575 ausgehend in die entgegengesetzte Richtung erstreckt. Die Längsflächen 472, 475 und die Schrägflächen 474, 473 sind illustrativ jeweils parallel zueinander ausgerichtet.

Im Wischbetrieb des Wischblatts 100 von Fig. 1 ist dessen Wischleiste 112 in einer zugeordneten Ausgangsposition bevorzugt derart über die Adaptereinheit 160 an den Wischerarm 190 angelenkt, dass dieser etwa parallel zu den Längsflächen 472, 475 ausgerichtet ist. Hierbei blockieren die Längsflächen 472, 475 ein Verschwenken des Wischerarms 190 relativ zur Adaptereinheit 160 in eine unerwünschte Schwenkrichtung, die in Fig. 5 einer Verschwenkung gegen den Uhrzeigersinn entsprechen würde. Um nun beim Wischen oder bei der Anlenkung der Wischleiste 112 von Fig. 1 am Wischerarm 190 ein erforderliches Verschwenken des Wischblatts 100 von Fig. 1 relativ zum Wischerarm 190 in eine entgegengesetzte Schwenkrichtung zu ermöglichen, d. h. in Fig. 5 im Uhrzeigersinn, sind die abgerundete Auflagefläche 574, die abgerundete Anlagefläche 575 sowie die Schrägflächen 474, 473 vorgesehen, die derart von der Auflagefläche 574 bzw. der Anlagefläche 575 abgewinkelt sind, dass der Wischerarm 190 nach der Verschwenkung um den Flächen 574, 575 zugeordnete Drehachsen 674 bzw. 675 etwa parallel zu den Schrägflächen 474, 473 ausgerichtet ist.

## Patentansprüche

1. Wischblatt (100) für einen Scheibenwischer, mit einer Wischleiste (112) und einer Adaptereinheit (160) zur Anlenkung der Wischleiste (112) an einem Wischerarm (190), wobei die Adaptereinheit (160) dauerhaft an der Wischleiste (112) befestigt ist und ein der Wischleiste (112) zugewandtes Wandelement (261) aufweist, an dem mindestens ein bolzenartiges Fixierelement (355) vorgesehen ist, das dazu ausgebildet ist, zur Fixierung des Wischerarms (190) an der Adaptereinheit (160) in mindestens eine am Wischerarm (190) vorgesehene Aussparung (390) einzugreifen und die Adaptereinheit (160) parallel zur axialen Richtung der Wischleiste (112) ausgerichtete und einander zugewandte, laterale Anlaufflächen (382, 482, 492, 384, 484, 494) aufweist, die senkrecht zur axialen Richtung der Wischleiste (112) derart voneinander beabstandet sind, dass ein Seitenspiel des in der Adaptereinheit (160) angeordneten Wischerarms (190) im Bereich vorgegebener Toleranzen liegt, **dadurch gekennzeichnet, dass** zumindest zwei in axialer Richtung der Wischleiste (112) einander gegenüberliegende Anlaufflächen (382, 384) eine geringere Beabstandung voneinander aufweisen, als zumindest zwei weitere, in axialer Richtung der Wischleiste (112) einander gegenüberliegende Anlaufflächen (482, 484).

2. Wischblatt nach Anspruch 1, **dadurch gekennzeichnet, dass** die am Wischerarm (190) vorgesehene Aussparung (390) eine Öffnung ist, wobei das bolzenartige Fixierelement (355) zum Durchgreifen durch die Öffnung ausgebildet ist.

3. Wischblatt nach Anspruch 1 oder 2, **dadurch gekennzeichnet, dass** an dem der Wischleiste (112) zugewandten Wandelement (261) mindestens eine abgerundete Auflagefläche (574) für den Wischerarm (190) vorgesehen ist, auf der der Wischerarm (190) zumindest bereichsweise schwenkbar um eine der Auflagefläche (574) zugeordnete Drehachse (674) lagerbar ist.

4. Wischblatt nach einem der vorhergehenden Ansprüche, **dadurch gekennzeichnet, dass** ein Fixierglied (150) zur Fixierung des Wischerarms (190) an der Adaptereinheit (160) vorgesehen ist.

5. Wischblatt nach Anspruch 4, **dadurch gekennzeichnet, dass** das Fixierglied (150) mindestens eine abgerundete Anlagefläche (575) für den Wischerarm (190) aufweist, an der der Wischerarm (190) zumindest bereichsweise schwenkbar um eine der Anlagefläche (575) zugeordnete Drehachse (675) anlenkbar ist.

6. Wischblatt nach einem der vorhergehenden Ansprüche, **dadurch gekennzeichnet, dass** die Adaptereinheit (160) an die Wischleiste (112) angeschweißt und/oder angeklebt ist.

7. Wischblatt nach einem der Ansprüche 1 bis 4, **dadurch gekennzeichnet, dass** die Adaptereinheit (160) durch Kunststoffspritzen an die Wischleiste (112) angeformt ist.

8. Wischblatt nach einem der vorhergehenden Ansprüche, **dadurch gekennzeichnet, dass** die Adaptereinheit (160) Drehgelenkfrei ausgebildet ist.

## Claims

1. Wiper blade (100) for a windscreen wiper, with a wiper strip (112) and an adapter unit (160) for coupling the wiper strip (112) to a wiper arm (190), wherein the adapter unit (160) is permanently fastened to the wiper strip (112) and has a wall element (261) which faces the wiper strip (112) and on which at least one bolt-like securing element (355) is provided, said securing element being designed to engage in at least one recess (390) provided on the wiper arm (190) in order to secure the wiper arm (190) on the adapter unit (160), and the adapter unit (160) has lateral stop surfaces (382, 482, 492, 384, 484, 494) which are oriented parallel to the axial direction of the wiper strip (112), face one another and are spaced apart from one another perpendicularly to the axial direction of the wiper strip (112) in such a manner that a lateral play of the wiper arm (190) arranged in the adapter unit (160) lies within the range of predetermined tolerances, **characterized in that** at least two stop surfaces (382, 384) which lie opposite each other in the axial direction of the wiper strip (112) are at a smaller distance from each other than at least two further stop surfaces (482, 484) which lie opposite each other in the axial direction of the wiper strip (112).

2. Wiper blade according to Claim 1, **characterized in that** the recess (390) provided on the wiper arm (190) is an opening, wherein the bolt-like securing element (355) is designed for reaching through the opening.

3. Wiper blade according to Claim 1 or 2, **characterized in that** at least one rounded supporting surface (574) for the wiper arm (190) is provided on the wall element (261) which faces the wiper strip (112), on which supporting surface the wiper arm (190) can be mounted at least in regions so as to be pivotable about an axis of rotation (674) assigned to the supporting surface (574).

4. Wiper blade according to one of the preceding claims, **characterized in that** a securing member (150) is provided for securing the wiper arm (190) on the adapter unit (160).

5. Wiper blade according to Claim 4, **characterized in that** the securing member (150) has at least one rounded bearing surface (575) for the wiper arm (190), to which bearing surface the wiper arm (190) can be coupled at least in regions so as to be pivotable about an axis of rotation (675) assigned to the bearing surface (575).

6. Wiper blade according to one of the preceding claims, **characterized in that** the adapter unit (160) is welded and/or adhesively bonded to the wiper strip (112).

7. Wiper blade according to one of Claims 1 to 4, **characterized in that** the adapter unit (160) is integrally formed on the wiper strip (112) by plastics injection moulding.

8. Wiper blade according to one of the preceding claims, **characterized in that** the adapter unit (160) is formed without a rotary joint.

## Revendications

1. Balai d'essuie-glace (100) pour un essuie-glace, comprenant, une raclette de balai d'essuie-glace (112) et une unité d'adaptateur (160) pour l'articulation de la raclette de balai d'essuie-glace (112) à un bras d'essuie-glace (190), l'unité d'adaptateur (160) étant fixée de manière durable à la raclette de balai d'essuie-glace (112) et présentant un élément de paroi (261) tourné vers la raclette de balai d'essuie-glace (112), au niveau duquel est prévu au moins un élément de fixation de type boulon (355) qui est réalisé, pour la fixation du bras d'essuie-glace (190) à l'unité d'adaptateur (160), pour s'engager dans au moins un évidement (390) prévu sur le bras d'essuie-glace (190) et l'unité d'adaptateur (160) présentant des surfaces de montée latérales (382, 482, 492, 384, 484, 494) orientées parallèlement à la direction axiale de la raclette de balai d'essuie-glace (112) et tournées les unes vers les autres, qui sont espacées les unes des autres perpendiculairement à la direction axiale de la raclette de balai d'essuie-glace (112), de telle sorte qu'un jeu latéral du bras d'essuie-glace (190) disposé dans l'unité d'adaptateur (160) se trouve dans des plages de tolérances prédéfinies, **caractérisé en ce qu'**au moins deux surfaces de montée (382, 384) opposées l'une à l'autre dans la direction axiale de la raclette de balai d'essuie-glace (112) présentent un plus petit espacement l'une de l'autre qu'au moins deux autres surfaces de montée (482, 484) opposées l'une à l'autre dans la direction axiale de la raclette de balai d'essuie-glace (112).

2. Balai d'essuie-glace selon la revendication 1, **caractérisé en ce que** l'évidement (390) prévu au niveau du bras d'essuie-glace (190) est une ouverture, l'élément de fixation de type boulon (355) étant réalisé pour venir en prise à travers l'ouverture.

3. Balai d'essuie-glace selon la revendication 1 ou 2, **caractérisé en ce qu'**au moins une surface de support arrondie (574) pour le bras d'essuie-glace (190) est prévue au niveau de l'élément de paroi (261) tourné vers la raclette de balai d'essuie-glace (112), sur laquelle le bras d'essuie-glace (190) peut être supporté de manière à pouvoir pivoter au moins en partie autour d'un axe de rotation (674) associé à la surface de support (574).

4. Balai d'essuie-glace selon l'une quelconque des revendications précédentes, **caractérisé en ce qu'**un organe de fixation (150) est prévu pour la fixation du bras d'essuie-glace (190) à l'unité d'adaptateur (160).

5. Balai d'essuie-glace selon la revendication 4, **caractérisé en ce que** l'organe de fixation (150) présente au moins une surface d'appui arrondie (575) pour le bras d'essuie-glace (190), à laquelle le bras d'essuie-glace (190) peut être articulé de manière à pouvoir pivoter au moins en partie autour d'un axe de rotation (675) associé à la surface d'appui (575).

6. Balai d'essuie-glace selon l'une quelconque des revendications précédentes, **caractérisé en ce que** l'unité d'adaptateur (160) est soudée et/ou collée à la raclette de balai d'essuie-glace (112).

7. Balai d'essuie-glace selon l'une quelconque des revendications 1 à 4, **caractérisé en ce que** l'unité d'adaptateur (160) est façonnée par moulage par injection de plastique sur la raclette de balai d'essuie-glace (112).

8. Balai d'essuie-glace selon l'une quelconque des revendications précédentes, **caractérisé en ce que** l'unité d'adaptateur (160) est réalisée sans articulation pivotante.
